# EUROPÄISCHE PATENTSCHRIFT

(11) **EP 1 537 945 B1**
(45) Veröffentlichungstag und Bekanntmachung des Hinweises auf die Patenterteilung: **30.05.2007**
(21) Anmeldenummer: 04405742.0
(22) Anmeldetag: 29.11.2004
(51) Int. Cl.: B23Q 11/00, B08B 15/04

(54) **Späneschutzgitter**
Protective grid for chips
Grille de protection pour les copeaux

(30) Priorität: 01.12.2003 EP 03405856
(43) Veröffentlichungstag der Anmeldung: 08.06.2005
(73) Patentinhaber: UT 99 AG, 8450 Andelfingen (CH)
(72) Erfinder: Stroitz, Winifred, 8493 Saland (CH)
(74) Vertreter: Clerc, Natalia

(56) Entgegenhaltungen:
- EP-A- 0 381 171
- EP-A- 0 567 208
- DE-A- 3 634 623
- DE-A- 10 259 253
- US-A- 4 754 655
- US-A- 4 947 510
- US-A- 5 271 123
- US-A- 6 101 666

## Beschreibung

### Technisches Gebiet

Die Erfindung betrifft eine Absaugvorrichtung gemäss Oberbegriff des Patentanspruchs 1.

### Stand der Technik

Spanabhebende Werkzeugmaschinen, insbesondere Fertigungszentren, weisen üblicherweise Absaugvorrichtungen auf, welche verschmutzte, insbesondere ölhaltige Luft aus dem Maschinenraum absaugen. Um zu verhindern, dass auch die herumwirbelnden Späne abgesaugt werden, welche die Absaugvorrichtung beschädigen und verstopfen könnten, werden Späneschutzgitter verwendet.

Dieses Späneschutzgitter ist üblicherweise ein flaches Gitter, welches in der Luftabsaugöffnung der Gehäusewand der Werkzeugmaschine eingelassen ist. Dieses Gitter stoppt angesaugte Späne und hält sie im Maschinenraum zurück. Die Späne haben die Tendenz, sich am Gitter abzulagern. Diese Ablagerungen verkleinern den Querschnitt der Absaugöffnung, so dass mit der Zeit die Saugleistung nicht mehr genügt. Eine regelmässige Reinigung des Gitters ist deshalb notwendig.

Aus DE 102 59 253 ist ferner ein Späneschutzgitter in Form eines quaderförmigen Spänekorbs aus Draht- oder Kunststoffgewebe bekannt. Dieser ist an der Gehäuseinnenseite montiert und ragt in den Maschinenraum hinein. Zur Reinigung des Spänekorbs wird eine Reinigungsdüse eingesetzt, welche um ihre eigene Achse drehbar gelagert ist. Durch diese Reinigungsdüse wird ein Reinigungsmedium in den Spänekorb gespritzt, um die am Korb anhaftenden Späne wieder in den Maschinenraum zurückzuschleudern. Dieser Spänekorb weist den Nachteil auf, dass er relativ viel Platz beansprucht. Zudem lassen sich die Eckbereiche des Spänekorbs nur sehr schlecht reinigen.

Aus DE 100 41 355 ist ein Späneschutzgitter in Form eines zylinderförmigen, langgestreckten Siebelements bekannt, das im Inneren eines wendelförmigen Förderelements einer Werkzeugmaschine angeordnet ist.

Ähnliche Problematiken stellen sich auch bei anderen Bearbeitungsmaschinen, beispielsweise bei Textilbearbeitungsmaschinen.

### Darstellung der Erfindung

Es ist deshalb eine Aufgabe der Erfindung, eine Absaugvorrichtung mit einem Partikel- oder Späneschutzgitter zu schaffen, welches eine einfachere Reinigung ermöglicht und wenig Platz im Maschinenraum beansprucht und den Querschnitt des Ansaugrohrs nicht verringert.

Diese Aufgabe löst eine Absaugvorrichtung mit einem Partikel- oder Späneschutzgitter mit den Merkmalen des Patentanspruchs 1.

Das erfindungsgemässe Partikel- oder Späneschutzgitter ist gewölbt, vorzugsweise teilkugelförmig ausgebildet. Dadurch weist es im Vergleich zu seinem Durchmesser eine relativ grosse Oberfläche auf.

Dank seiner gewölbten, insbesondere dank seiner teilkugelförmigen Form lässt sich das Gitter über seine gesamte Fläche gleich gut reinigen. Die Form, insbesondere das Fehlen von Eckbereichen, verhindert zudem weitgehend, dass abgelagerte Späne Nester bilden können.

In einer bevorzugten Ausführungsform ist das Gitter drehbar gelagert. Diese Lagerung ermöglicht eine Reinigung mit einer minimalen Anzahl Reinigungsdüsen. Eine einzige Düse reicht bereits aus.

In einer weiteren bevorzugten Ausführungsform ist das Gitter mindestens teilweise, vorzugsweise vollständig innerhalb eines Absaugrohrs der Absaugvorrichtung angeordnet und benötigt somit einen minimalen Platz innerhalb des Maschinenraums.

In einer bevorzugten Ausführungsform ist das Absaugrohr lösbar am Gehäuse der Werkzeugmaschine befestigt. Dieses Absaugrohr lässt sich auch mit anderen als das hier beschriebene Späneschutzgitter einsetzen.

Weitere vorteilhafte Ausführungsformen gehen aus den abhängigen Patentansprüchen hervor.

### Kurze Beschreibung der Zeichnung

Im folgenden wird der Erfindungsgegenstand anhand von bevorzugten Ausführungsbeispielen, welche in der beiliegenden Zeichnung dargestellt sind, erläutert. Es zeigen:
- Figuren 1a: einen Längsschnitt durch einen Teil einer erfindungsgemässen Absaugvorrichtung mit einem erfindungsgemässen Partikel- oder Späneschutzgitter gemäss einer ersten Ausführungsform;
- Figur 1b: eine Ansicht auf die Absaugvorrichtung gemäss Figur 1a von oben;
- Figur 2a: einen Längsschnitt durch einen Teil einer erfindungsgemässen Absaugvorrichtung mit einem erfindungsgemässen Partikel- oder Späneschutzgitter gemäss einer zweiten Ausführungsform und
- Figur 2b: eine Ansicht auf die Absaugvorrichtung gemäss Figur 2a von oben.

### Wege zur Ausführung der Erfindung

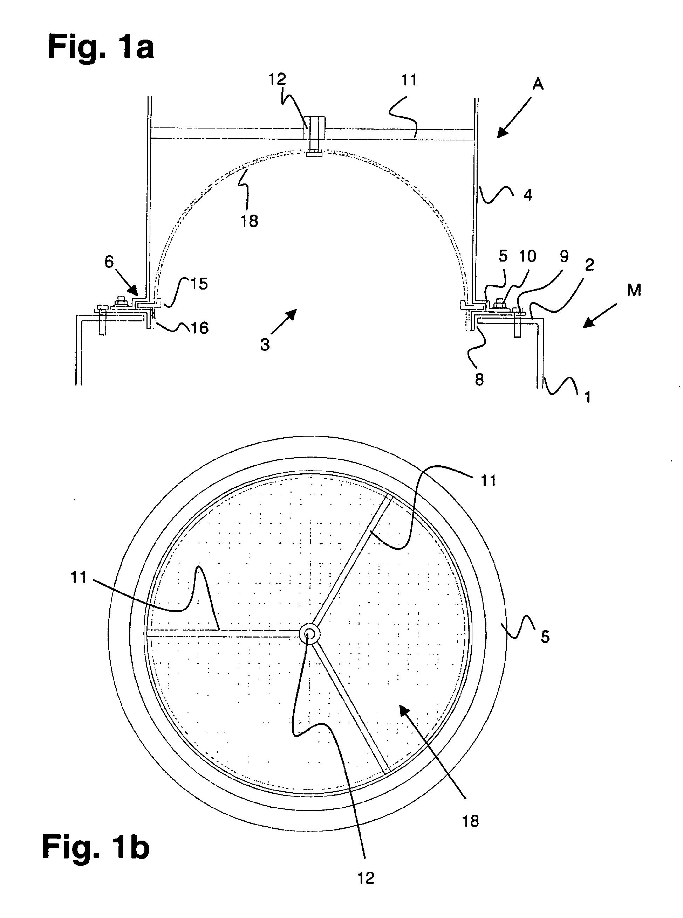

In den Figuren 1a und 1b ist eine erste Ausführungsform der erfindungsgemässen Absaugvorrichtung dargestellt. In einer Wand 2 eines Maschinengehäuses 1 einer Werkzeugmaschine ist eine Absaugöffnung 3 vorhanden, welche den Maschinenraum M mit der Absaugvorrichtung A verbindet. Üblicherweise ist die Absaugöffnung 3 in einer Decke des Gehäuses angeordnet. Sie kann sich jedoch an jeder geeigneten Stelle, beispielsweise an einer Seiten- oder Rückwand befinden.

In der Absaugöffnung 3 ist ein ringförmiges Winkelelement 8 angeordnet, welches auf dem die Absaugöffnung 3 umgebenden Rand der Wand 2 aufliegt und mittels mindestens eines ersten Befestigungsmittels 9, vorzugsweise mittels Schrauben, lösbar an der Wand 2 befestigt ist. Über der Absaugöffnung 3 befindet sich ein Absaugrohr 4 der Absaugvorrichtung A. Das Absaugrohr 4 weist an seinem unteren Ende einen umlaufenden Befestigungsflansch auf, welcher auf dem Winkelelement 8 aufliegt und mittels mindestens eines zweiten Befestigungsmittels 10, vorzugsweise wiederum Schrauben, an diesem lösbar befestigt ist. Dadurch lässt sich das Absaugrohr 4 auf einfache Art und Weise vom Gehäuse 1 entfernen und reinigen.

Im Absaugrohr 4 ist erfindungsgemäss ein Späneschutzgitter 18 angeordnet. Es befindet sich vorzugsweise vollständig innerhalb des Rohrs und ragt somit nicht in den Maschinenraum hinein. Es kann jedoch auch teilweise oder vollständig im Maschinenraum angeordnet sein.

Das Gitter 18 kann beispielsweise ein Metallsieb sein oder aus einem Draht- oder Kunststoffgewebe bestehen. Die Öffnungen des Gitters 18 sind dabei so klein ausgebildet, dass sie die Späne zurückhalten können. Dieses Späneschutzgitter 18 weist erfindungsgemäss eine gewölbte Form auf. Vorzugsweise ist es rotationssymmetrisch, insbesondere teil- oder halbkugelförmig. Seine Öffnung ist in der Gebrauchslage zum Maschinenraum hin gerichtet.

Im Absaugrohr 4 ist in geeigneter Höhe mindestens ein Steg 11 vorhanden. Hier sind es drei Stege 11, welche in einer Ebene liegen und an einem Punkt der Längsmittelachse des Absaugrohrs 4 miteinander verbunden sind. An dieser Stelle ist ein Aufhängemittel 12 befestigt. An diesem Aufhängemittel 12 ist das Späneschutzgitter 18 aufgehängt, vorzugsweise ist es im Bereich seiner Mittelachse beziehungsweise in seinem Schwerpunkt befestigt. Das Späneschutzgitter 18 ist dabei vorzugsweise drehbar gelagert.

Am unteren Ende des Späneschutzgitters 18 ist ein umlaufender Abschlussflansch 15 angeordnet. Dieser Flansch 15 greift in eine umlaufende Nut ein, welche durch eine Stufe 6 des Befestigungsflansches 5 und dem Winkelelement 8 gebildet ist. Damit ein Strömungskanal zwischen Späneschutzgitter 18 und Rohrmantelung 7 des Absaugrohrs 4 vermieden ist, ist eine umlaufende Bürste 16 vorhanden, welche am Winkelelement 8 befestigt ist und welche am Abschlussflansch 15 dichtend anliegt. Wird das Späneschutzgitter 18 und der Abschlussflansch 15 rotiert, so gleitet der Flansch 15 entlang der Bürste 16.

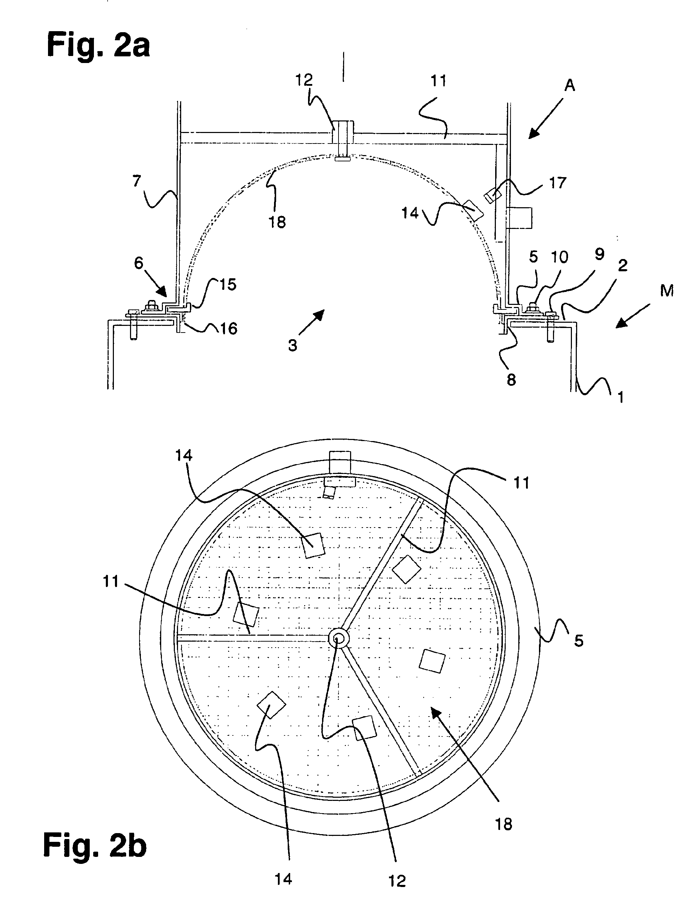

In den Figuren 2a und 2b ist ein weiteres bevorzugtes Ausführungsbeispiel dargestellt. Es ist im wesentlichen gleich aufgebaut wie das oben beschriebene Beispiel. Gleiche Merkmale sind deshalb mit gleichen Bezugsziffern bezeichnet. In diesem Beispiel ist jedoch mindestens eine Reinigungsdüse 17 vorhanden, welche im Bereich des Späneschutzgitters 18 angeordnet ist. Vorzugsweise ist sie an der Rohrmantelung 7 lagefixiert befestigt. Die Düse 17 ist vorzugsweise schräg zum Gitter 18 hin gerichtet. Vorzugsweise erstreckt sie sich in radialer Richtung zum Kugelmittelpunkt des Gitters 18 hin.

Über diese Düse 17 lässt sich ein Reinigungsmedium, beispielsweise Druckluft oder eine Reinigungsflüssigkeit, in Richtung Gitter 18 blasen oder spülen. Dadurch lassen sich Späne, welche sich am Gitter 18 angelagert haben, auf einfache Art und Weise in den Maschinenraum zurück befördern. Es ist somit nicht notwendig das Gitter zwecks Reinigung auszubauen. Vorteilhaft ist ferner, dass die mindestens eine Düse relativ wenig Platz benötigt und nicht eine zusätzliche Reinigungsvorrichtung am oder im Maschinengehäuse angebracht werden muss.

Ist das Späneschutzgitter 18 drehbar ausgebildet, so genügen wenige, insbesondere eine einzige Düse 17, auf einer Seite der Vorrichtung. Das Gitter 18 wird nämlich durch die Strömung des Reinigungsmediums gedreht, so dass die gesamte Gitteroberfläche 18 diese Düsen 17 passiert und so gereinigt werden kann. Damit die Drehung bereits bei geringen Strömungsgeschwindigkeiten erfolgt, weist das Gitter 18 an seiner äusseren, dem Maschinenraum abgewandten Oberfläche vorzugsweise Luftwiderstandsmittel 14 auf, welche der Oberfläche vorstehen und somit Angriffspunkte für die Strömung bilden. Derartige Luftwiderstandsmittel 14 sind beispielsweise vorstehende Metallplättchen oder andere Fähnchen.

Die zwei oben beschriebenen Beispiele stellen bevorzugte Ausführungsformen dar. Andere Ausführungsformen sind jedoch möglich. Beispielsweise kann auch ein anders geformtes Späneschutzgitter derart im Absaugrohr befestigt sein, dass es nicht in den Maschinenraum hineinragt und somit keinen Platz im Maschinenraum beansprucht. Auch in diesem Fall erleichtert die lösbare Befestigung des Absaugrohrs eine Reinigung des Späneschutzgitters.

Das erfindungsgemässe Späneschutzgitter beziehungsweise die erfindungsgemässe Absaugvorrichtung beanspruchen keinen Platz im Maschinenraum und vereinfachen die Reinigung.

### Bezugszeichenliste

- M: Maschinenraum
- A: Absaugvorrichtung
- 1: Maschinengehäuse
- 2: Wand
- 3: Absaugöffnung
- 4: Absaugrohr
- 5: Befestigungsflansch
- 6: Stufe
- 7: Rohrmantelung
- 8: Winkelelement
- 9: Erstes Befestigungsmittel
- 10: Zweites Befestigungsmittel
- 11: Steg
- 12: Aufhängmittel
- 14: Luftwiderstandsmittel
- 15: Abschlussflansch
- 16: Bürste
- 17: Reinigungsdüse
- 18: Späneschutzgitter

## Patentansprüche

1. Absaugvorrichtung einer Bearbeitungsmaschine, insbesondere einer spanabhebenden Werkzeugmaschine, mit einem gewölbt ausgebildeten Partikel- oder Späneschutzgitter (18), **dadurch gekennzeichnet, dass** das Partikel- oder Späneschutzgitter (18) teilkugelförmig ausgebildet ist.

2. Absaugvorrichtung nach Anspruch 1, wobei das Partikel- oder Späneschutzgitter (18) halbkugelförmig ausgebildet ist.

3. Absaugvorrichtung nach Anspruch 1, wobei das Partikel- oder Späneschutzgitter (18) rotationssymmetrisch ausgebildet ist.

4. Absaugvorrichtung nach einem der Ansprüche 1 bis 3, wobei an der äusseren Oberfläche des Partikel- oder Späneschutzgitters (18) Luftwiderstandsmittel (14) angeordnet sind.

5. Absaugvorrichtung nach einem der Ansprüche 1 bis 4, wobei das Partikel- oder Späneschutzgitter (18) in Gebrauchslage zum Maschinenraum hin offen ausgebildet ist.

6. Absaugvorrichtung nach einem der Ansprüche 1 bis 5, wobei das Gitter (18) drehbar gelagert ist.

7. Absaugvorrichtung nach Anspruch 6, wobei die Absaugvorrichtung ein Absaugrohr (4) aufweist und wobei das Gitter (18) mindestens teilweise, vorzugsweise ganz, innerhalb dieses Absaugrohrs (4) angeordnet ist.

8. Absaugvorrichtung nach Anspruch 7, wobei im Absaugrohr (4) mindestens ein Steg (10) angeordnet ist, an welchem ein Aufhängemittel (11) befestigt ist, an welchem das Gitter (18) im Bereich seiner Mittelachse aufgehängt ist.

9. Absaugvorrichtung nach Anspruch 6, wobei die Absaugvorrichtung ein Absaugrohr (4) aufweist, welches lösbar an einer Gehäusewand (2) der Werkzeugmaschine befestigbar ist.

10. Absaugvorrichtung nach einem der Ansprüche 6 bis 9, wobei sie mindestens eine Reinigungsdüse (17) aufweist, welche im Bereich des Gitters (18) angeordnet ist und mittels welcher am Gitter (18) angelagerte Späne in einen Maschinenraum der Maschine zurückbeförderbar sind.

## Claims

1. Extraction device of a processing machine, in particular a machine tool, having a protective grid (18) for particles or chips which is of arched design, **characterized in that** the protective grid (18) for particles or chips is of partly spherical design.

2. Extraction device according to Claim 1, wherein the protective grid (18) for particles or chips is of hemispherical design.

3. Extraction device according to Claim 1, wherein the protective grid (18) for particles or chips is of rotationally symmetrical design.

4. Extraction device according to one of Claims 1 to 3, wherein air-resistance means (14) are arranged on the outer surface of the protective grid (18) for particles or chips.

5. Extraction device according to one of Claims 1 to 4, wherein the protective grid (18) for particles or chips is designed to be open towards the machine space in the position of use.

6. Extraction device according to one of Claims 1 to 5, wherein the grid (18) is rotatably mounted.

7. Extraction device according to Claim 6, wherein the extraction device has an extraction tube (4), and the grid (18) is arranged at least partly, preferably entirely, inside this extraction tube (4).

8. Extraction device according to Claim 7, wherein at least one web (11) is arranged in the extraction tube (4), and a suspension means (12) on which the grid (18) is suspended in the region of its centre axis is fastened to said web (11).

9. Extraction device according to Claim 6, wherein the extraction device has an extraction tube (4) which can be releasably fastened to a housing wall (2) of the machine tool.

10. Extraction device according to one of Claims 6 to 9, wherein it has at least one cleaning nozzle (17) which is arranged in the region of the grid (18) and by means of which chips deposited on the grid (18) can be conveyed back into the machine space of the machine.

## Revendications

1. Dispositif d'aspiration d'une machine d'usinage, notamment d'une machine-outil à enlèvement de copeaux, comprenant une grille de protection (18) contre les copeaux ou les particules réalisée avec une forme courbe, **caractérisé en ce que** la grille de protection (18) contre les copeaux ou les particules est réalisée en forme de sphère partielle.

2. Dispositif d'aspiration selon la revendication 1, dans lequel la grille de protection (18) contre les copeaux ou les particules est réalisée en forme de demi-sphère.

3. Dispositif d'aspiration selon la revendication 1, dans lequel la grille de protection (18) contre les copeaux ou les particules est réalisée avec une symétrie de révolution.

4. Dispositif d'aspiration selon l'une quelconque des revendications 1 à 3, dans lequel on dispose sur la surface extérieure de la grille de protection (18) contre les copeaux ou les particules des moyens de résistance à l'air (14).

5. Dispositif d'aspiration selon l'une quelconque des revendications 1 à 4, dans lequel la grille de protection (18) contre les copeaux ou les particules est réalisée ouverte vers l'espace machine dans la position d'utilisation.

6. Dispositif d'aspiration selon l'une quelconque des revendications 1 à 5, dans lequel la grille (18) est montée à rotation.

7. Dispositif d'aspiration selon la revendication 6, dans lequel le dispositif d'aspiration présente un tube d'aspiration (4) et dans lequel la grille (18) est disposée au moins en partie, de préférence complètement, à l'intérieur de ce tube d'aspiration (4).

8. Dispositif d'aspiration selon la revendication 7, dans lequel au moins une nervure (11) est disposée dans le tube d'aspiration (4), à laquelle est fixé un moyen d'accrochage (12) sur lequel la grille (18) est accrochée dans la région de son axe médian.

9. Dispositif d'aspiration selon la revendication 6, dans lequel le dispositif d'aspiration présente un tube d'aspiration (4) qui peut être fixé de manière amovible à une paroi de boîtier (2) de la machine-outil.

10. Dispositif d'aspiration selon l'une quelconque des revendications 6 à 9, **caractérisé en ce qu'**il présente au moins une buse de nettoyage (17) qui est disposée dans la région de la grille (18) et au moyen de laquelle des copeaux accumulés contre la grille (18) peuvent être ramenés dans un espace machine de la machine.
